# FASCICULE DE BREVET EUROPEEN

(11) **EP 2 108 542 B1**
(45) Date de publication et mention de la délivrance du brevet: **31.08.2011**
(21) Numéro de dépôt: 09290264.2
(22) Date de dépôt: 09.04.2009
(51) Int. Cl.: B60N 2/30, B60N 2/72

(54) **Coussin de siège de véhicule automobile comprenant un insert surmoulé pour son montage en rotation**
Sitzkissen eines Kraftfahrzeugsitzes, das ein eingeschaumtes Einsatzelement zur schwenkbarer Montage enthält
Automobile seat cushion comprising an overmoulded insert for swivelling mount

(30) Priorité: 10.04.2008 FR 0801987
(43) Date de publication de la demande: 14.10.2009
(73) Titulaire: Centre d'étude et de recherche pour l'automobile (CERA), 51100 Reims (FR)
(72) Inventeur: Davergne, Laurence, 51100 Reims (FR); Georges, Laurent, 08190 Roizy (FR); Vial, Julien, 10320 Souligny (FR)
(74) Mandataire: Sayettat, Julien Christian

(56) Documents cités:
- WO-A-2006/087023
- FR-A- 2 738 535
- FR-A- 2 777 233
- FR-A- 2 841 509

## Description

L'invention concerne un coussin de siège de véhicule automobile et un ensemble comprenant un tel coussin.

II est connu de réaliser un coussin, notamment d'assise, de siège de véhicule automobile, ledit coussin comprenant :
- un bloc de rembourrage à base de mousse flexible moulée,
- une coiffe de garnissage de la partie supérieure dudit bloc, ladite coiffe pouvant être surmoulée par ledit bloc.
- un insert à base de matériau plastique.

Le document WO-2006/087023 décrit un coussin selon le préambule de la revendication 1.

On peut prévoir par ailleurs de fixer au coussin un moyen de montage en rotation du bloc par rapport à la structure du véhicule, ceci à des fins d'escamotage du coussin.

Dans les coussins connus, il est usuel de prévoir une structure métallique surmoulée par le bloc, par exemple sous la forme de fil métallique conformé en zigzags ou sous la forme d'une plaque, l'enveloppe surfacique de ladite structure s'étendant de sorte à rigidifier ledit bloc sur toute sa surface, afin de faciliter son escamotage.

Le moyen de montage est usuellement à base de métal soudé à la structure métallique.

L'utilisation d'une telle structure, notamment sous la forme d'un fil métallique, permet en outre un accrochage de la coiffe par le biais de moyens de rappel issus de cette dernière.

Un tel agencement est complexe, coûteux et lourd.

L'invention a pour but de pallier ces inconvénients.

A cet effet, et selon un premier aspect, l'invention propose un coussin de siège de véhicule automobile, selon la revendication 1.

Dans l'agencement proposé, le fait que la coiffe soit surmoulée par le bloc permet d'assurer une rigidification dudit bloc, sa flexion étant gênée par la coiffe qui en est étroitement solidaire. La structure de rigidification connue de l'art antérieur, qui était solidaire du moyen de montage, est remplacée par un insert en matériau léger ayant pour fonction de réaliser la fixation du moyen de montage et non d'assurer la rigidité du bloc.

Les caractéristiques complémentaires font l'objet des revendications dépendantes.

Selon un deuxième aspect, l'invention propose un ensemble comprenant un tel coussin.

D'autres particularités et avantages de l'invention apparaîtront dans la description qui suit, faite en référence aux figures jointes dans lesquelles :

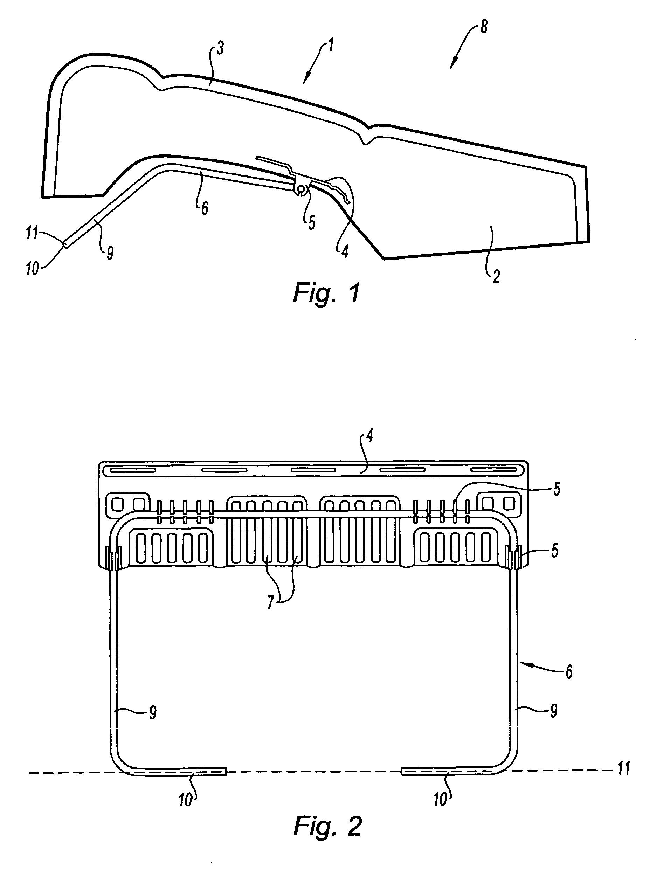

- la figure 1 est une vue schématique latérale d'un ensemble selon une réalisation,
- la figure 2 est une vue de dessous d'un insert sur lequel est fixé un moyen de montage selon la réalisation de la figure 1.

Dans cette description, les termes de positionnement dans l'espace sont pris en référence à l'ensemble disposé dans le véhicule.

En référence aux figures, on décrit un coussin 1; ici d'assise, de siège de véhicule automobile, ledit coussin comprenant :
- un bloc 2 de rembourrage à base de mousse flexible moulée,
- une coiffe 3 de garnissage de la partie supérieure dudit bloc, ladite coiffe étant surmoulée par ledit bloc,
ledit coussin comprenant en outre un insert 4 à base de matériau plastique, ledit insert étant surmoulé par ladite mousse, ledit insert comprenant des moyens de fixation 5 destinés à recevoir un moyen de montage 6 en rotation dudit bloc par rapport à la structure du véhicule.

Les moyens de fixation 5 sont agencés de sorte que le moyen de montage 6 en rotation soit mobile par rapport à l'insert 4, afin de réaliser un escamotage du coussin 1 selon deux axes de rotation.

Les moyens de fixation 5, ici sous forme de clips, sont agencés de sorte à permettre de recevoir en emboîtement le moyen de montage 6.

Les moyens de fixation 5 sont saillants du bloc 2, de sorte à permettre une fixation du moyen de montage 6 dans une étape ultérieure au moulage dudit bloc.

L'insert 4 est sous forme générale d'une plaque, présentant ici des ouvertures 7, s'étendant selon la largeur du bloc 2, ce qui permet son ancrage efficace dans ledit bloc.

De façon non représentée, le coussin 1 peut comprendre en outre une couche de revêtement d'envers surmoulée par le bloc 2, ce qui permet d'accentuer la rigidité dudit bloc.

Selon une réalisation, la couche de revêtement d'envers présente une couronne périphérique non surmoulée, ce qui évite la contrainte de réaliser une finition périphérique.

On décrit à présent un ensemble 8 comprenant un coussin 1 et un moyen de montage 6 en rotation du bloc 2 par rapport à la structure du véhicule, ledit moyen de montage étant fixé, notamment par emboîtement, sur l'insert 4.

Le moyen de montage 6 est ici sous la forme d'un tube métallique recourbé en U, les pattes 9 du U étant écartées l'une de l'autre sensiblement de la largeur du bloc 2 et étant saillantes de l'insert 4 de sorte à pouvoir être montées en rotation.

Les extrémités libres 10 des pattes 9 sont recourbées l'une vers l'autre de sorte à définir un axe 11 de rotation destiné à être monté sur la structure de sol du véhicule.

## Revendications

1. Coussin (1) de siège de véhicule automobile, ledit coussin comprenant:
. un bloc (2) de rembourrage a base de mousse flexible moulée,
. une coiffe (3) de garnissage de la partie supérieure dudit bloc,
. un insert (4) a base de matériau plastique
ledit coussin étant **caractérisé en ce que** ledit insert est surmoulé par ladite mousse dudit bloc de rembourrage, ledit insert comprenant des moyens de fixation (5) destinés à recevoir un moyen de montage (6) en rotation dudit bloc de rembourrage par rapport à la structure du véhicule, et **en ce que** ladite coiffe est surmoulée par ledit bloc de rembourrage.

2. Coussin selon la revendication 1, **caractérisé en ce que** les moyens de fixation (5) sont agencés de sorte que le moyen de montage (6) en rotation soit mobile par rapport à l'insert (4).

3. Coussin selon la revendication 1 ou 2, **caractérisé en ce que** les moyens de fixation (5) sont agencés de sorte à permettre de recevoir en emboîtement le moyen de montage (6).

4. Coussin selon l'une quelconque des revendications 1 à 3, **caractérisé en ce que** les moyens de fixation (5) sont saillants du bloc (2), de sorte à permettre une fixation du moyen de montage (6) dans une étape ultérieure au moulage dudit bloc.

5. Coussin selon l'une quelconque des revendications 1 à 4, **caractérisé en ce que** l'insert (4) est sous forme générale d'une plaque s'étendant selon la largeur du bloc (2).

6. Coussin selon l'une quelconque des revendications 1 à 5, **caractérisé en ce qu'**il comprend en outre une couche de revêtement d'envers surmoulée par le bloc (2).

7. Coussin selon la revendication 6, **caractérisé en ce que** la couche de revêtement d'envers présente une couronne périphérique non surmoulée.

8. Ensemble (8) comprenant un coussin selon l'une quelconque des revendications 1 à 7, **caractérisé en ce qu'**il comprend en outre un moyen de montage en rotation (6) du bloc (2) par rapport à la structure du véhicule, ledit moyen de montage étant fixé sur l'insert (4).

9. Ensemble selon la revendication 8, **caractérisé en ce que** le moyen de montage (6) est sous forme d'un tube métallique recourbé en U, les pattes (9) du U étant écartées l'une de l'autre sensiblement de la largeur du bloc (2) et étant saillantes de l'insert (4) de sorte à pouvoir être montées en rotation.

10. Ensemble selon la revendication 9, **caractérisé en ce que** les extrémités libres (10) des pattes sont recourbées l'une vers l'autre de sorte à définir un axe (11) de rotation destiné à être monté sur la structure de sol du véhicule.

## Claims

1. Cushion (1) for motor vehicle seat, said cushion comprising:
- a padding block (2) made of moulded flexible foam,
- a trim cover (3) of the upper portion of said block,
- an insert (4) made of plastic material
said cushion being **characterised in that** said insert is overmoulded by said foam of said padding block, said insert comprising a fixing unit (5) intended to receive a rotational mounting unit (6) of said padding block with respect to the structure of the vehicle, and **in that** said cover is overmoulded by said padding block.

2. Cushion according to claim 1, **characterised in that** the fixing unit (5) is arranged in such a way that the rotational mounting unit (6) is mobile in relation to the insert (4).

3. Cushion according to claim 1 or 2, **characterised in that** the fixing unit (5) is arranged is such a way as to make it possible to receive by nesting the mounting unit (6) .

4. Cushion according to any of claims 1 to 3, **characterised in that** the fixing unit (5) is protruding from the block (2), in such a way as to make possible a fixing of the mounting unit (6) in a step subsequent to the moulding of said block.

5. Cushion according to any of claims 1 to 4, **characterised in that** the insert (4) has the general shape of a plate extending along the width of the block (2) .

6. Cushion according to any of claims 1 to 5, **characterised in that** it further comprises a layer of back coating overmoulded by the block (2).

7. Cushion according to claim 6, **characterised in that** the layer of back coating has a non-overmoulded peripheral crown.

8. Unit (8) comprising a cushion according to any of claims 1 to 7, **characterised in that** it further comprises a rotational mounting unit (6) of the block (2) with respect to the structure of the vehicle, said mounting unit being fixed on the insert (4).

9. Unit according to claim 8, **characterised in that** the mounting unit (6) has the shape of a metal tube curved in U shape, the legs (9) of the U being separated from one another substantially by the width of the block (2) and protruding from the insert (4) in such a way as to be able to be mounted in rotation.

10. Unit according to claim 9, **characterised in that** the free ends (10) of the legs are curved towards one another in such a way as to define an axis (11) of rotation intended to be mounted on the floor structure of the vehicle.

## Patentansprüche

1. Sitzkissen (1) eines Kraftfahrzeuges, wobei das Kissen Folgendes umfasst :
- einen Polsterblock (2), basierend auf einem geformten flexiblen Schaum,
- eine Verkleidungsabdeckung (3) des oberen Teils des Blocks,
- einen Einsatz (4) basierend auf Plastikmaterial
wobei das Kissen **dadurch gekennzeichnet ist, dass** der Einsatz nach dem Schaum des Polsterblocks geformt ist, wobei der Einsatz Mittel zur Befestigung (5) umfasst, die dazu vorgesehen sind, ein Mittel zur schwenkbaren Montage (6) des Polsterblocks bezüglich der Struktur des Fahrzeugs aufzunehmen, und **dadurch**, dass die Verkleidung nach dem Polterblock geformt ist.

2. Kissen nach Anspruch 1, **dadurch gekennzeichnet, dass** die Mittel zu Befestigung (5) so angeordnet sind, dass das Mittel zur schwenkbaren Montage (6) bezüglich des Einsatzes (4) beweglich ist.

3. Kissen nach Anspruch 1 oder 2, **dadurch gekennzeichnet, dass** die Mittel zu Befestigung (5) so angeordnet sind, dass sie ermöglichen, das Mittel zur Montage (6) durch Ineinandergreifen aufzunehmen.

4. Kissen nach einem der Ansprüche 1 bis 3, **dadurch gekennzeichnet, dass** die Mittel zur Befestigung (5) aus dem Block (2) herausragen, um eine Befestigung des Mittels zur Montage (6) in einem Schritt nach dem Formen des Blocks zu ermöglichen.

5. Kissen nach einem der Ansprüche 1 bis 4, **dadurch gekennzeichnet, dass** der Einsatz (4) die allgemeine Form einer Platte aufweist, die sich entlang der Breite des Blocks (2) erstreckt.

6. Kissen nach einem der Ansprüche 1 bis 5, **dadurch gekennzeichnet, dass** es außerdem eine rückseitige Verkleidungsschicht umfasst, die nach dem Block (2) geformt ist.

7. Kissen nach Anspruch 6, **dadurch gekennzeichnet, dass** die rückseitige Verkleidungsschicht einen nicht abgeformten peripheren Kranz aufweist.

8. Einheit (8), umfassend ein Kissen nach einem der Ansprüche 1 bis 7, **dadurch gekennzeichnet, dass** es außerdem ein Mittel zur schwenkbaren Montage (6) des Blocks (2) bezüglich der Struktur des Fahrzeugs umfasst, wobei das Mittel zur Montage auf dem Einsatz (4) befestigt ist.

9. Einheit nach Anspruch 8, **dadurch gekennzeichnet, dass** das Mittel zur Montage (6) die Form eines metallischen Rohrs, zu einem U gebogen, aufweist, wobei die Schenkel (9) des U voneinander im Wesentlichen um die Breite des Blocks (2) beabstandet sind und aus dem Einsatz (4) herausragen, um schwenkbar montiert zu werden.

10. Einheit nach Anspruch 9, **dadurch gekennzeichnet, dass** die freien Enden (10) der Schenkel gegeneinander gebogen sind, um eine Drehachse (11) zu definieren, die dazu vorgesehen ist, auf der Bodenstruktur des Fahrzeugs montiert zu werden.
